(19) Europäisches Patentamt
European Patent Office
Office européen des brevets

(11) **EP 4 425 678 A1**

(12) **EUROPEAN PATENT APPLICATION**

(43) Date of publication:
04.09.2024 Bulletin 2024/36

(21) Application number: 24152785.2

(22) Date of filing: 19.01.2024

(51) International Patent Classification (IPC):
*H01M 50/426* (2021.01)     *H01M 50/446* (2021.01)
*H01M 50/451* (2021.01)     *H01M 50/457* (2021.01)
*H01M 50/489* (2021.01)     *H01M 50/42* (2021.01)
*H01M 50/46* (2021.01)     *H01M 50/417* (2021.01)
*H01M 10/05* (2010.01)     *H01M 10/052* (2010.01)
*H01M 10/0525* (2010.01)     *H01M 10/02* (2006.01)

(52) Cooperative Patent Classification (CPC):
**H01M 50/426; H01M 50/417; H01M 50/42;**
**H01M 50/446; H01M 50/451; H01M 50/457;**
**H01M 50/461; H01M 50/489;** H01M 10/02;
H01M 10/05; H01M 10/052; H01M 10/0525;
H01M 2220/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 28.02.2023  KR 20230026493
18.01.2024  KR 20240007840

(71) Applicant: **LG Energy Solution, Ltd.**
**Seoul 07335 (KR)**

(72) Inventors:
• **BAE, Won Sik**
**34122 Daejeon (KR)**

• **LEE, So Yeong**
**34122 Daejeon (KR)**
• **SUNG, Dong Wook**
**34122 Daejeon (KR)**
• **LEE, Byeong Kyu**
**34122 Daejeon (KR)**
• **LEE, Yong Hee**
**34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **SEPARATOR FOR ELECTROCHEMICAL DEVICE AND ELECTROCHEMICAL DEVICE COMPRISING SAME**

(57) The present disclosure relates to a separator for an electrochemical device and an electrochemical device comprising the same, and specifically, to a separator for an electrochemical device, which adjusts the contents of halogen atoms and metal atoms exposed on the surface of a coating layer, thereby enabling a dry adhesive force and a wet adhesive force to be improved and the heat resistance of the separator to be improved, and an electrochemical device comprising the same.

FIG. 1A

**Description**

## TECHNICAL FIELD

The present disclosure claims the benefit of the filing date of Korean Patent Application No. 10-2023-0026493, filed with the Korean Intellectual Property Office on February 28, 2023 and the benefit of the filing date of Korean Patent Application No. 10-2024-0007840, filed with the Korean Intellectual Property Office on January 18, 2024, all of which is included in the present disclosure. The present disclosure relates to a separator for an electrochemical device and an electrochemical device comprising the same, and specifically, to a separator for an electrochemical device, which adjusts the contents of halogen atoms and metal atoms exposed on the surface of a coating layer, thereby enabling a dry adhesive force and a wet adhesive force to be improved and the heat resistance of the separator to be improved, and an electrochemical device comprising the same.

## BACKGROUND

A separator among the components of an electrochemical device includes a polymer substrate having a porous structure located between a cathode and an anode, and serves to isolate the cathode and the anode, prevent electrical short circuit between the two electrodes, and pass an electrolyte and ions. The separator itself does not participate in the electrochemical reaction, but physical properties such as wettability to the electrolyte, degree of porosity, thermal shrinkage ratio, and the like affect the performance and safety of the electrochemical device.

Accordingly, various methods have been attempted to change the physical properties of the coating layer by adding a coating layer to a porous polymer substrate and adding various materials to the coating layer in order to enhance the physical properties of the separator. For example, an inorganic material may be added to the coating layer in order to improve mechanical strength of the separator, or an inorganic material or hydrate may be added to the coating layer in order to improve flame retardancy and heat resistance of the polymer substrate.

The separator may be bonded to an electrode through a lamination process, and a binder resin may be added to a slurry for the coating layer of the separator in order to secure adhesive force between the electrode and the separator.

Meanwhile, in the case of oil-based slurry coating using an organic solvent such as acetone in the process of forming a coating layer on the separator, there are restrictions and environmental regulations on manufacturing the separator due to the organic solvent, and there has been a problem in that the investment cost is increased since it is necessary to prepare facilities for treating an organic solvent used in the process of manufacturing the separator. Furthermore, in order to apply a lamination and stacking (L and S) process for improving production efficiency in the process of assembling a battery, it has been required to secure adhesive force to the separator.

Therefore, it has been necessary to study a separator that secures proper adhesive force for performing the lamination and stacking process and does not use an organic solvent in the separator manufacturing process.

## SUMMARY

The technical problem to be achieved by the present disclosure is to provide a separator for an electrochemical device, which adjusts the type and amount of atoms located on the surface of the coating layer in order to maintain adhesive force in the process of manufacturing a secondary battery in which an electrode and a separator are laminated, and does not require a separate solvent treatment facility since an organic solvent is not contained in a slurry for preparing a coating layer, and an electrochemical device comprising the same.

However, the problem to be solved by the present disclosure is not limited to the above-mentioned problem, and other problems not mentioned will be clearly understood by those skilled in the art from the following description.

One embodiment of the present disclosure provides a separator for an electrochemical device, including: a porous polymer substrate; and a coating layer provided on at least one surface of the porous polymer substrate and containing first polymer binder particles, second polymer binder particles, and inorganic particles, wherein the content of halogen atoms exposed from the surface of the coating layer. which is the opposite surface of one surface provided with the porous polymer substrate, is 10% by weight or less based on 100% by weight of the total atoms exposed from the surface of the coating layer; and the content of metal atoms exposed from the surface of the coating layer is 20% by weight or more based on 100% by weight of the total atoms exposed from the surface of the coating layer.

According to one embodiment of the present disclosure, the ratio of the content of halogen atoms exposed from the surface of the coating layer in wt% based on 100% by weight of the total atoms exposed from the surface of the coating layer and the content of halogen atoms in the coating layer in wt% based on 100% by weight of the total atoms in the coating layer, is in the range of 0.5 to 2.5.

According to one embodiment of the present disclosure, the ratio of metal atoms exposed from the surface of the coating layer in wt% based on 100% by weight of the total atoms exposed from the surface of the coating layer and halogen atoms exposed from the surface of the coating layer in wt% based on 100% by weight of the total atoms exposed from the surface of the coating layer, is in the range of 2.5 and 10.

According to one embodiment of the present disclosure, the content of halogen atoms exposed from the surface of the coating layer may be 1% by weight or more and 10% by weight or less based on 100% by weight of the total atoms exposed from the surface of the coating layer.

According to one embodiment of the present disclosure, the content of metal atoms exposed from the surface of the coating layer may be 20% by weight or more and 50% by weight or less based on 100% by weight of the total atoms exposed from the surface of the coating layer.

According to one embodiment of the present disclosure, the surface of the coating layer is evenly distributed porous.

According to one embodiment of the present disclosure, the surface of the coating layer has mostly an evenly distributed particle-based morphology.

According to one embodiment of the present disclosure, the first polymer binder particles may be an acrylic binder particles, and / or.

the second polymer binder particles may be a polyvinylidene-based binder.

According to one embodiment of the present disclosure, the polyvinylidene-based binder may be a copolymer of polyvinylidene fluoride and hexafluoropropylene.

According to one embodiment of the present disclosure, the halogen atom may be a fluorine atom.

According to one embodiment of the present disclosure, the metal atom may be one selected from the group consisting of Al, Ba, Ti, Pb, Zr, La, Mg, Nb, Sr, Si, Y, Zn, Sn, Sb, Pt and combinations thereof, and / or

the metal atom is derived from the inorganic particles of the coating layer, wherein the inorganic particles are selected from the group consisting of $BaTiO_3$, $Pb(Zr,Ti)O_3$ (PZT), $Pb_{1-x}La_xZr_{1-y}Ti_yO_3$ (PLZT, 0<x<1, 0< y<1), $Pb(Mg_{1/3}Nb_{2/3})O_3$-$PbTiO_3$ (PMN-PT), Hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, SiC, $Al(OH)_3$, $TiO_2$, aluminum peroxide, zinc tin hydroxide ($ZnSn(OH)_6$), tin-zinc oxide ($Zn_2SnO_4$, $ZnSnO_3$), antimony trioxide ($Sb_2O_3$), antimony tetraoxide ($Sb_2O_4$), antimony pentoxide ($Sb_2O_5$) and combinations thereof, preferably $Al_2O_3$.

According to one embodiment of the present disclosure, the coating layer may have a dry adhesive force of 35 gf/20 mm or more.

According to one embodiment of the present disclosure, the coating layer may have a wet adhesive force of 10 gf/20 mm or more.

One embodiment of the present disclosure provides an electrochemical device including: a cathode; an anode; and the separator interposed between the cathode and the anode.

According to one embodiment of the present disclosure, the cathode contains a cathode active material layer, and the coating layer of the separator is in direct contact with the cathode active material layer; and / or

wherein the anode contains an anode active material layer and the coating layer of the separator is in direct contact with the anode active material layer.

The separator for an electrochemical device according to one embodiment of the present disclosure can be properly provided with a halogen element and a metal element on the surface of the coating layer, and improve a dry adhesive force and a wet adhesive force to improve battery manufacturing efficiency.

The electrochemical device according to one embodiment of the present disclosure can reduce manufacturing cost, and can facilitate the manufacture of the electrochemical device due to improved adhesive force of the separator.

## BRIEF DESCRIPTION OF THE DRAWINGS

FIGS. 1A and 1B are schematic views of a separator for an electrochemical device according to one embodiment of the present disclosure. Specifically, FIG. 1A is a schematic view of a separator for an electrochemical device provided with a coating layer on one surface, and FIG. 1B is a schematic view of a separator for an electrochemical device provided with a coating layer on both surfaces.

FIG. 2 is a schematic view of an electrochemical device according to one embodiment of the present disclosure.

FIG. 3 is a photograph of the surface of Example 1 according to one embodiment of the present disclosure taken by energy dispersive X-ray spectroscopy (EDS) and a table showing the contents of elements disposed on the surface.

FIG. 4 is a photograph of the surface of Comparative Example 1 taken by EDS and a table showing the contents of elements disposed on the surface.

FIG. 5 is a photograph of the surface of Comparative Example 2 taken by EDS and a table showing the contents of elements disposed on the surface.

FIG. 6 is a photograph of the surface of Comparative Example 3 taken by EDS and a table showing the contents of elements disposed on the surface.

FIG. 7 is a photograph of the surface of Comparative Example 4 taken by EDS and a table showing the contents of elements disposed on the surface.

FIG. 8 is a photograph of the surface of Comparative Example 5 taken by EDS and a table showing the contents of elements disposed on the surface.

FIG. 9 is a photograph of the surface of Example 2 according to one embodiment of the present disclosure taken by EDS and a table showing the contents of elements disposed on the surface.

## DETAILED DESCRIPTION

Hereinafter, various embodiments of the present disclosure will be described in detail so that those ordinarily skilled in the art to which the present disclosure pertains, can easily carry out the present disclosure. However, these are only examples given for illustrative purposes, and the scope of the present disclosure is not intended to be limited to the following contents.

Unless otherwise restricted, a detailed description defining or specifying the elements may be applied to all inventions, and is not limited to descriptions of particular inventions. That is, the present disclosure also refers to combinations of the embodiments even if they are disclosed separately. Additionally, unless explicitly stated otherwise, a singular form includes a plural form throughout the detailed description and the appended claims.

In this specification, when a part is said to "include" a certain component, it means that it may further include other components without excluding other components unless specifically stated otherwise. However, unless explicitly stated otherwise, "comprising" or "including" or the like includes "essentially comprising" and "consisting of'.

The term "essentially comprises" as used herein has the meaning of "comprising at least 70 %", preferably of "comprising at least 80 %", most preferred of "comprising at least 90 %". If reference is made to the amount of a constituent in a mixture of material, % is wt %, relative to the total weight of the respective mixture. For example, a material essentially comprising polyethylene comprises the polyethylene in an amount of at least 70 wt% with respect to the total weight of the material.

In this specification, "A and/or B" means "A and B, or A or B".

In this specification, when one component is said to be provided "on" other component, unless specifically stated otherwise, this does not exclude that another component is disposed therebetween, but means that another component may be further disposed therebetween.

However, unless explicitly stated otherwise, "on" encompasses the meaning "directly on", that is, the situation in which no other component(s) may be further disposed therebetween.

In this specification, the property of "having pores" or being "porous" means that an object contains a plurality of pores, and thus a gas-phase fluid and/or a liquid-phase fluid can pass from one side of the object to the other side thereof by a structure in which the pores are connected to each other.

In this specification, the separator has a porous property containing a plurality of pores, and serves as a porous ion-conducting barrier to pass ions while blocking electrical contact between an anode and a cathode in an electrochemical device.

Hereinafter, the present disclosure will be described in more detail.

One embodiment of the present disclosure provides a separator 100 for an electrochemical device, including: a porous polymer substrate 110; and a coating layer 130 provided on at least one surface of the porous polymer substrate 110 and containing first polymer binder particles 131, second polymer binder particles 133, and inorganic particles 135, wherein the content of halogen atoms exposed from the surface of the coating layer 130 which is the opposite surface of one surface provided with the porous polymer substrate 110 is 10% by weight or less based on 100% by weight of the total atoms exposed from the surface of the coating layer 130, and the content of metal atoms exposed from the surface of the coating layer 130 is 20% by weight or more based on 100% by weight of the total atoms exposed from the surface of the coating layer 130.

The separator 100 for an electrochemical device according to one embodiment of the present disclosure can be properly provided with a halogen element and a metal element on the surface of the coating layer 130, and improve a dry adhesive force and a wet adhesive force to improve battery manufacturing efficiency.

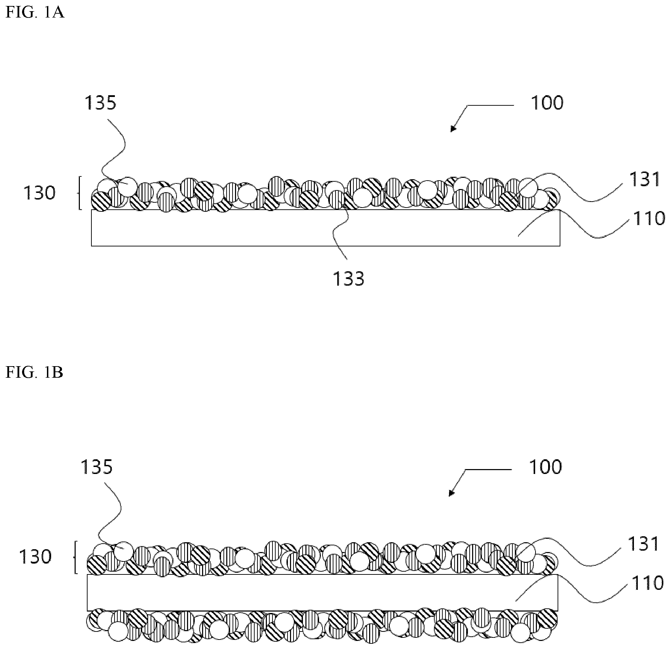

FIGS. 1A and 1B are schematic views of a separator 100 for an electrochemical device according to one embodiment of the present disclosure. Specifically, FIG. 1A is a schematic view of a separator for an electrochemical device provided with a coating layer on one surface, and FIG. 1B is a schematic view of a separator for an electrochemical device provided with a coating layer on both surfaces. Referring to FIGS. 1A and 1B, the separator 100 for an electrochemical device according to one embodiment of the present disclosure will be described in detail.

According to one embodiment of the present disclosure, the separator 100 for an electrochemical device includes a porous polymer substrate 110. As described above, since the separator 100 for an electrochemical device includes the porous polymer substrate 110, it allows lithium ions to pass through while blocking electrical contact, and enables a shutdown function to be implemented at an appropriate temperature.

According to one embodiment of the present disclosure, the porous polymer substrate 110 may be manufactured by using a polyolefin-based resin as a base resin. Examples of the polyolefin-based resin may include polyethylene, polypropylene, polypentene, and the like, and may include one or more thereof. A porous separator, that is, a separator having a large number of pores, prepared using such a polyolefin-based resin as a base resin, may impart a shutdown function at an appropriate temperature.

According to one embodiment of the present disclosure, the polyolefin-based resin may have a weight average molecular weight of 500,000 or more and 1,500,000 or less. Compression resistance of the separator may be improved by adjusting the weight average molecular weight of the polyolefin-based resin within the above-described range. Furthermore, when different kinds of polyolefin-based resins are mixed and used or when a separator is formed in a multilayer structure made of different kinds of polyolefin-based resins, the weight average molecular weight of the polyolefin-based resin may be calculated by adding the weight average molecular weights according to the content ratios of the respective polyolefin-based resins.

In this specification, the weight average molecular weight (Mw) may be measured by gel permeation chromatography (GPC, PL GPC220, Agilent Technologies), and the measurement conditions may be set as follows.

- Column: PL Olexis (Polymer Laboratories)
- Solvent: TCB (Trichlorobenzene)
- Flow rate: 1.0 ml/min
- Sample concentration: 1.0 mg/ml
- Injection amount: 200 $\mu$l
- Column temperature: 160°C
- Detector: Agilent High Temperature RI detector
- Standard: Polystyrene (correction with cubic function)

According to one embodiment of the present disclosure, the porous polymer substrate 110 may be manufactured by a method (wet method) of performing stretching and heat setting treatment of the resulting material after kneading a polyolefin-based resin with a plasticizer (diluent) at high temperatures to make a single phase, phase-separating the polymer material and the plasticizer in a cooling process, and then extracting the plasticizer to form pores. In addition, the porous polymer substrate using a polyolefin-based resin may include a core portion made of a mixture of polyethylene and polypropylene and a polyethylene skin portion laminated on both surfaces of the core portion.

According to one embodiment of the present disclosure, the average size and maximum size of pores of the separator 100 may be easily adjusted by those skilled in the art to meet the scope of the present disclosure by adjusting the mixing ratio of the plasticizer, the stretching ratio, the heat setting treatment temperature, etc.

According to one embodiment of the present disclosure, the porous polymer substrate may have a thickness of 1 $\mu$m or more and 50 $\mu$m or less. Specifically, the porous polymer substrate may have a thickness of 2 $\mu$m or more and 45 $\mu$m or less, 3 $\mu$m or more and 40 $\mu$m or less, 4 $\mu$m or more and 35 $\mu$m or less, 5 $\mu$m or more and 30 $\mu$m or less, 6 $\mu$m or more and 25 $\mu$m or less, 7 $\mu$m or more and 20 $\mu$m or less, or 8 $\mu$m or more and 15 $\mu$m or less. The energy density of the battery may be improved by adjusting the thickness of the porous polymer substrate within the above-described range.

According to one embodiment of the present disclosure, the porous polymer substrate may have a porosity of 10% by volume or more and 90% by volume or less. Specifically, the porous polymer substrate may have a porosity of 10% by volume or more and 90% by volume or less, 20% by volume or more and 80% by volume or less, 30% by volume or more and 70% by volume or less, or 40% by volume or more and 60% by volume or less. The separator permeability of lithium ions may be controlled by adjusting the porosity of the porous polymer substrate within the above-described range.

According to one embodiment of the present disclosure, the separator 100 for an electrochemical device includes a coating layer 130 provided on at least one surface of the porous polymer substrate 110. Specifically, the separator 100 for an electrochemical device includes a coating layer 130 provided on one or both surfaces of the porous polymer substrate 110. As described above, since the separator 100 for an electrochemical device includes the coating layer 130 provided on at least one surface of the porous polymer substrate 110, heat resistance of the separator may be improved, mechanical properties thereof may be improved, and the occurrence of electrical short-circuit of the electrode due to contraction of the separator at high temperatures may be prevented. According to one embodiment of the present disclosure, the coating layer 130 includes first polymer binder particles 131, second polymer binder particles 133, and inorganic particles 135. As described above, since the coating layer 130 includes the first polymer binder particles 131, the second polymer binder particles 133, and the inorganic particles 135, heat resistance of the separator may be improved, mechanical properties thereof may be improved, the occurrence of electrical short-circuit of the electrode due to contraction of the separator at high temperatures may be prevented, and pores may be formed in the coating layer.

According to one embodiment of the present disclosure, the coating layer 130 may contain a plurality of pores. Specifically, the coating layer may be a porous coating layer. More specifically, the coating layer may be a porous coating layer containing a plurality of pores therein. As described above, since the coating layer contains a plurality of pores, it may be possible to allow current to flow by passing lithium ions while physically blocking the anode and the cathode.

According to one embodiment of the present disclosure, the inorganic particles 135 may be bound by the first polymer binder particles 131 and the second polymer binder particles 133 and integrated into the coating layer to form the coating layer 130. The pores inside the coating layer 130 may be due to an interstitial volume, which is an empty space between the inorganic particles.

According to one embodiment of the present disclosure, the coating layer 130 may be formed to a thickness of 1 $\mu$m to 20 $\mu$m on either side of the porous polymer substrate 110, but is not particularly limited thereto. The thickness may be adjusted within an appropriate range by those skilled in the art in terms of heat resistance or electrical resistance.

In one embodiment of the present disclosure, the thickness of the porous polymer substrate and/or the coating layer may be measured by applying a contact type thickness meter. As the contact type thickness meter, for example, Mitutoyo's VL-50S-B may be used.

According to one embodiment of the present disclosure, the content of halogen atoms exposed from the surface of the coating layer 130, which is the opposite surface of one surface on which the porous polymer substrate 110 is provided, is 10% by weight or less based on 100% by weight of the total atoms exposed from the surface of the coating layer. Specifically, the content of halogen atoms exposed from the surface of the coating layer 130, which is the opposite surface of one surface on which the porous polymer substrate 110 is provided, may be more than 0% by weight and 10% by weight or less, 1% by weight or more and 9% by weight or less, 2% by weight or more and 8% by weight or less, 3% by weight or more and 7% by weight or less, or 4% by weight or more and 6% by weight or less based on 100% by weight of the total atoms exposed from the surface of the coating layer. Wet adhesive force of the separator may be improved, stiffness of the pouch type cell may be improved, and bending thereof may be prevented by adjusting the content of halogen atoms exposed from the surface of the coating layer 130 within the above-described range.

According to one embodiment of the present disclosure, the content of metal atoms exposed from the surface of the coating layer 130 is 20% by weight or more based on 100% by weight of the total atoms exposed from the surface of the coating layer 130. Specifically, the content of metal atoms exposed from the surface of the coating layer 130 may be 21% by weight or more and 49% by weight or less, 22% by weight or more and 48% by weight or less, 23% by weight or more and 47% by weight or less, 24% by weight or more and 46% by weight or less, 25% by weight or more and 45% by weight or less, 26% by weight or more and 44% by weight or less, 27% by weight or more and 43% by weight or less, 28% by weight or more and 42% by weight or less, 29% by weight or more and 41% by weight or less, 30% by weight or more and 40% by weight or less, 31% by weight or more and 39% by weight or less, 32% by weight or more and 38% by weight or less, 33% by weight or more and 37% by weight or less, or 34% by weight or more and 36% by weight or less based on 100% by weight of the total atoms exposed from the surface of the coating layer 130. The heat resistance of the separator may be improved, the wet adhesive force of the separator may be improved, the stiffness of the pouch type cell may be improved, and banding thereof may be prevented by adjusting the content of metal atoms exposed from the surface of the coating layer 130 within the above-described range.

According to one embodiment of the present disclosure, the ratio of the content of halogen atoms exposed from the surface of the coating layer in wt% based on 100% by weight of the total atoms exposed from the surface of the coating layer and the content of halogen atoms in the coating layer in wt% based on 100% by weight of the total atoms in the coating layer, is in the range of 0.5 to 2.5, 0.55 to 2.0, 0.60 to 1.5, 0.65 to 1.0. In other words, the ratio of halogens exposed from the surface versus the halogen atoms contained in the containing layer is in the range of 0.5 to 2.5, wherein the halogen atoms exposed from the surface are measured in wt% based on 100% by weight of the total atoms exposed from the surface of the coating layer. The above range may be of 0.5 to 2.5, 0.55 to 2.0, 0.60 to 1.5, 0.65 to 1.0. The total atoms exposed from the surface of the coating layer, including halogens, metals, etc. may be measured by EDS as it is further defined above. The content of halogen atoms in the coating layer in wt% based on 100% by weight of the total atoms in the coating layer may be determined from the manufacture of the coating layer. Alternatively, the content and the composition of the coating layer may be determined by elemental analysis, e.g. ICP-OES, as it is known by the skilled person in the art.

According to one embodiment of the present disclosure, the ratio of metal atoms exposed from the surface of the coating layer in wt% based on 100% by weight of the total atoms exposed from the surface of the coating layer and halogen atoms exposed from the surface of the coating layer in wt% based on 100% by weight of the total atoms exposed from the surface of the coating layer, is in the range of 2.5 to 10, 3.5 to 9, 4.5 to 8.5, 5.5 to 8.0, 6.5 to 7.5. The total atoms exposed from the surface of the coating layer, including halogens, metals, etc. may be measured by EDS as it is further defined above.

According to one embodiment of the present disclosure, the content of halogen atoms exposed from the surface of the coating layer 130 and the content of metal atoms exposed from the surface of the coating layer 130 may mean those analyzed by energy dispersive X-ray spectroscopy (EDS) (Hitachi, S-4800). More specifically, they may mean the weights of elements shown by energy dispersive X-ray spectroscopy (EDS) analysis under an accelerating voltage condition of 15.0 kV with respect to the photographed images after photographing the surface of the coating layer (Magnification: $\times$ 10,000, resolution: 1280 $\times$ 960, Secondary electron mode, accelarating voltage: 15 kV, Working distance: 15mm, detector: Silicon drift detector).

According to one embodiment of the present disclosure, the first polymer binder particles 131 may be an acrylic binder. As described above, an acrylic binder is selected as the material of the first polymer binder particles 131 so that the porosity of the separator may be maintained, and the adhesive force between the electrode and the separator is improved in the lamination process of a battery so that the battery may be easily manufactured, and the stacking process may be stably implemented.

According to one embodiment of the present disclosure, the acrylic binder is a polymer containing carboxylic acid ester as a repeating unit, and preferably may be a (meth)acrylic acid ester or an acrylic-styrene copolymer.

According to one embodiment of the present disclosure, specific examples of the (meth)acrylic acid ester may include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate , n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, ethylene di(meth)acrylate, and the like, and may be one or more selected therefrom. The (meth)acrylic acid ester is preferably one or more selected from methyl (meth)acrylate, ethyl (meth)acrylate, and 2-ethylhexyl (meth)acrylate among them, and particularly preferably methyl (meth)acrylate.

According to one embodiment of the present disclosure, the acrylic-styrene copolymer may include an acrylic binder, and the acrylic binder may be a polyacrylate binder. For example, the acrylic binder may include one or more selected from the group consisting of styrene-butadiene rubber, nitril-butadiene rubber, acrylonitrile-butadiene rubber, acrylonitrile-butadiene-styrene rubber, and acrylate-based polymers, and specifically, may be a copolymer containing acrylate.

According to one embodiment of the present disclosure, the first polymer binder particles 131 may have a glass transition temperature (Tg) of 20°C or more and 60°C or less. Specifically, the first polymer binder particles may have a glass transition temperature (Tg) of 22°C or more and 58°C or less, 24°C or more and 56°C or less, 26°C or more and 54°C or less, 28°C or more and 52°C or less, 30°C or more and 50°C or less, 32°C or more and 48°C or less, 34°C or more and 46°C or less, 36°C or more and 44°C or less, or 38°C or more and 42°C or less. The glass transition temperature (Tg) of the first polymer binder particles is adjusted within the above-described range so that the viscosity of a slurry for preparing the coating layer may be adjusted to improve the convenience of battery manufacturing.

According to one embodiment of the present disclosure, the average diameter ($D_{50}$) of the first polymer binder particles 131 is not particularly limited, but is preferably in a range of 0.1 $\mu$m or more and 1 $\mu$m or less in order to form a coating layer 130 having a uniform thickness and an appropriate porosity. Specifically, the first polymer binder particles 131 may have an average diameter ($D_{50}$) of 0.2 $\mu$m or more and 0.9 $\mu$m or less, 0.3 $\mu$m or more and 0.8 $\mu$m or less, 0.4 $\mu$m or more and 0.7 $\mu$m or less, or 0.5 $\mu$m or more and 0.6 $\mu$m or less. The average diameter ($D_{50}$) of the first polymer binder particles 131 is adjusted within the above-described range so that dispersibility in the slurry prepared for coating layer preparation may be improved, and the thickness of the coating layer formed may be reduced.

According to one embodiment of the present disclosure, the second polymer binder particles 133 may be a polyvinylidene-based binder. Specifically, according to one embodiment of the present disclosure, the polyvinylidene-based binder may be a copolymer of polyvinylidene fluoride (PVdF) and hexafluoropropylene (HFP). As described above, the second polymer binder particles 133 that are a polyvinylidene-based binder are selected so that the porosity of the separator may be maintained, and even if the coating layer is wetted by the electrolyte after the battery is activated, the adhesive force may be maintained. Furthermore, stiffness of the battery may be improved and bending of the separator may be prevented.

According to one embodiment of the present disclosure, the second polymer binder particles 133 may be a polyvinylidene-based binder in which hexafluoropropylene (HFP) is contained in an amount of 1% by weight or more and 50% by weight or less. Specifically, the second polymer binder particles 133 may be a polyvinylidene-based binder in which hexafluoropropylene (HFP) is contained in an amount of 1% by weight or more and 50% by weight or less, 2% by weight or more and 45% by weight or less, 3% by weight or more and 40% by weight or less, 4% by weight or more and 35% by weight or less, 5% by weight or more and 30% by weight or less, 7% by weight or more and 25% by weight or less, or 10% by weight or more and 20% by weight or less. As described above, the second polymer binder particles 133 that are a polyvinylidene-based binder in which hexafluoropropylene is contained in an amount of 1% by weight or more and 50% by weight or less are selected so that the porosity of the separator may be maintained, and even if the coating layer is wetted by the electrolyte after the battery is activated, the adhesive force may be maintained. In this specification, the degree of substitution of the polyvinylidene-based binder may mean the weight ratio at which hexafluoropropylene is contained.

According to one embodiment of the present disclosure, the average diameter ($D_{50}$) of the second polymer binder particles 133 is not particularly limited, but is preferably in a range of 0.1 $\mu$m or more and 1 $\mu$m or less in order to form a coating layer 130 having a uniform thickness and an appropriate porosity. Specifically, the second polymer binder particles 133 may have an average diameter ($D_{50}$) of 0.2 $\mu$m or more and 0.9 $\mu$m or less, 0.3 $\mu$m or more and 0.8 $\mu$m or less, 0.4 $\mu$m or more and 0.7 $\mu$m or less, or 0.5 $\mu$m or more and 0.6 $\mu$m or less. The average diameter ($D_{50}$) of the second polymer binder particles 133 is adjusted within the above-described range so that dispersibility in the slurry prepared for preparing the coating layer may be improved and the thickness of the coating layer formed may be reduced.

According to one embodiment of the present disclosure, the total content of the first polymer binder particles 131 and the second polymer binder particles 133 may be 25 parts by weight or less with respect to 100 parts by weight of the coating layer 130. Specifically, the total content of the first polymer binder particles 131 and the second polymer binder particles 133 may be more than 0 part by weight and 25 parts by weight or less, 1 part by weight or more and 24 parts by weight or less, 2 parts by weight or more and 23 parts by weight or less, 3 parts by weight or more and 22 parts by weight or less, 4 parts by weight or more and 21 parts by weight or less, 5 parts by weight or more and 20 parts by weight or less, 6 parts by weight or more and 19 parts by weight or less, 7 parts by weight or more and 18 parts by weight or less, 8 parts by weight or more and 17 parts by weight or less, 9 parts by weight or more and 16 parts by weight or less, 10 parts by weight or more and 15 parts by weight or less, 11 parts by weight or more and 14 parts by weight or less, or 12 parts by weight or more and 13 parts by weight or less based on 100 parts by weight of the coating layer 130. The total content of the first polymer binder particles 131 and the second polymer binder particles 133 is adjusted within the above-described range so that assembling easiness in the process of assembling the electrode may be improved.

According to one embodiment of the present disclosure, the first polymer binder particles 131 and the second polymer binder particles 133 in the coating layer 130 may have a weight ratio of 9:1 to 1:9. Specifically, the first polymer binder particles 131 and the second polymer binder particles 133 in the coating layer 130 may have a weight ratio of 8:1 to 1:8, 7:1 to 1:7, 6:1 to 6:1, 5:1 to 1:5, 4:1 to 1:4, 3:1 to 1:3, or 2:1 to 1:2. The weight ratio of the first polymer binder particles and the second polymer binder particles is adjusted within the above-described range, wet adhesive force and dry adhesive force of the separator for an electrochemical device may be simultaneously improved, and the content of fluorine atoms exposed on the surface of the coating layer may be adjusted.

According to one embodiment of the present disclosure, the inorganic particles 135 may be contained in an amount of more than 75 parts by weight based on 100 parts by weight of the coating layer 130. Specifically, the inorganic particles 135 may be contained in an amount of more than 75 parts by weight and less than 100 parts by weight, 76 parts by weight or more and 99 parts by weight or less, 77 parts by weight or more and 98 parts by weight or less, 78 parts by weight or more and 97 parts by weight or less, 79 parts by weight or more and 96 parts by weight or less, 80 parts by weight or more and 95 parts by weight or less, 81 parts by weight or more and 94 parts by weight or less, 82 parts by weight or more and 93 parts by weight or less, 83 parts by weight or more 92 parts by weight or less, 84 parts by weight or more and 91 parts by weight or less, 85 parts by weight or more and 90 parts by weight or less, 86 parts by weight or more and 89 parts by weight or less, or 87 parts by weight or more and 88 parts by weight or less based on 100 parts by weight of the coating layer 130. The content of the inorganic particles 135 is adjusted within the above-described range so that the heat resistance of the separator may be improved.

According to one embodiment of the present disclosure, the inorganic particles 135 usable for the coating layer 130 are not particularly limited as long as they are electrochemically stable. That is, inorganic particles that can be used in one embodiment of the present disclosure are not particularly limited as long as they are those that do not undergo oxidation and/or reduction reactions in the operating voltage range (e.g., 0 V to 5 V based on Li/Li$^+$) of an electrochemical device applied.

According to one embodiment of the present disclosure, nonlimiting examples of the inorganic particles 135 may include $BaTiO_3$, $Pb(Zr,Ti)O_3$ (PZT), $Pb_{1-x}La_xZr_{1-y}Ti_yO_3$ (PLZT, 0<x<1, 0< y<1), $Pb(Mg_{1/3}Nb_{2/3})O_3$-$PbTiO_3$ (PMN-PT), Hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, SiC, $Al(OH)_3$, $TiO_2$, aluminum peroxide, zinc tin hydroxide ($ZnSn(OH)_6$), tin-zinc oxide ($Zn_2SnO_4$, $ZnSnO_3$), antimony trioxide ($Sb_2O_3$), antimony tetraoxide ($Sb_2O_4$), antimony pentoxide ($Sb_2O_5$), and the like, and may include one, or two or more thereof.

According to one embodiment of the present disclosure, the average diameter ($D_{50}$) of the inorganic particles 135 is not particularly limited, but is preferably in a range of 0.3 $\mu$m or more and 1 $\mu$m or less in order to form a coating layer 130 having a uniform thickness and an appropriate porosity. Specifically, the inorganic particles 135 may have an average diameter ($D_{50}$) of 0.2 $\mu$m or more and 0.9 $\mu$m or less, 0.3 $\mu$m or more and 0.8 $\mu$m or less, 0.4 $\mu$m or more and 0.7 $\mu$m or less, or 0.5 $\mu$m or more and 0.6 $\mu$m or less. Specifically, when the average diameter is less than 0.3 $\mu$m, the dispersibility of the inorganic particles in the slurry prepared to prepare the coating layer may decrease, and when the average diameter exceeds 1 $\mu$m, the thickness of a coating layer to be formed may increase.

In this specification, "$D_{50}$ particle diameter" means a particle diameter at the 50% point of the cumulative distribution of the number of particles according to the particle diameter. The particle diameter may be measured using a laser diffraction method. Specifically, after dispersing a powder to be measured in a dispersion medium, it is introduced into a commercially available laser diffraction particle size measuring device (e.g., Microtrac S3500) to measure the difference in diffraction pattern according to the particle size when the particles pass through the laser beam, thereby calculating a particle diameter distribution. The $D_{50}$ particle diameter may be measured by calculating the particle diameter at the point where the particle diameter distribution becomes 50% of the cumulative distribution of the number of particles according to the particle diameter in the measuring device. The $D_{50}$ particle diameter may be measured according to ISO 13320-1 (Particle size analysis- Laser diffraction methods).

According to one embodiment of the present disclosure, the coating layer 130 may have a porosity of 30% by volume or more. Specifically, the coating layer 130 may have a porosity of 30% by volume or more and 70% by volume or less, 32% by volume or more and 68% by volume or less, 34% by volume or more and 66% by volume or less, 36% by volume or more and 64% by volume or less, 38% by volume or more and 62% by volume or less, 40% by volume or more and 60% by volume or less, 42% by volume or more and 58% by volume or less, 44% by volume or more and 56% by volume or less, 46% by volume or more and 54% by volume or less, or 48% by volume or more and 52% by volume or less. The porosity of the coating layer 130 is adjusted within the above-described range so that the movement of ions in the separator may be maintained, and an increase in resistance of the separator may be prevented. Specifically, if the porosity is 70% by volume or less, dynamic properties that can withstand the press process of bonding it with the electrode may be secured, and it is also suitable for securing adhesive force since the surface opening ratio does not become too high. Meanwhile, when the porosity is 30% by volume or more, it is advantageous in terms of ion permeability.

In this specification, "porosity" means a ratio of the volume occupied by pores to the total volume, uses % by volume as its unit, and may be used interchangeably with terms such as pore ratio and porosity.

In this specification, the porosity may correspond to a value obtained by subtracting the volume converted into the weight and density of each component of the porous polymer substrate 110 and/or the coating layer 130 from the volume calculated in the thickness, width, and length of the porous polymer substrate 110 and/or the coating layer 130.

In one embodiment of the present disclosure, the porosity and pore size of the porous polymer substrate 110 and/or the coating layer 130 may be measured by the BET 6-point method by the nitrogen gas adsorption flow method using a scanning electron microscope (SEM) image, a mercury porosimeter, or a capillary flow porometer (iCFP-1100 by poretech), or a porosimetry analyzer (Bell Japan Inc, Belsorp-II mini). At this time, it may be advantageous to use the capillary flow porometer, that may be measured according to ASTM-F316.

According to one embodiment of the present disclosure, the surface of the coating layer may be evenly distributed porous. Thus, the coating layer may be evenly spred over the surface of the coating layer. An even distribution may result in consistent pore sizes and shapes across the surface, which may be measured by SEM, when taking an electron image of 60$\mu$m to 60$\mu$m. The pore size on the surface of the coating layer may be 30 $\mu$m or less, 25 $\mu$m or less, 25 $\mu$m or less, 20 $\mu$m or less, 15 $\mu$m or less, 10 $\mu$m or less, 5 $\mu$m or less, 3 $\mu$m or less, 2 $\mu$m or less, but the pore size may be 0.001 $\mu$m or above, 0.01 $\mu$m or above, like in a range between 0.001 and $\mu$m and 30 $\mu$m. The pore size on the surface of the coating layer may be measured by SEM, when taking an electron image of 60$\mu$m to 60$\mu$m. Alternatively, the pore size may be measured as it defined above as it is known by the skilled person. An even distribution may show a regular pattern or spacing of pores across the surface, which may be measured by SEM, when taking an electron image of 60$\mu$m to 60$\mu$m.

According to one embodiment of the present disclosure, the surface of the coating layer may have mostly an evenly distributed particle-based morphology. A "mostly evenly distributed particle-based morphology" on the surface of a coating layer may refer to a distinct pattern and arrangement of particles that exhibits a high degree of uniformity and regularity. The coating layer may demonstrate a uniform distribution of particles per unit area. One unit area may be 60$\mu$m to 60$\mu$m of an electron image measured by SEM. In a mostly evenly distributed particle-based morphology the particles may be spaced consistently, so that there may be no regions with significantly higher or lower particle concentrations. The particles may maintain a consistent shape across the surface. The shape may be spherical, angular, or another shape, and their morphology may remain constant, so that they may contribute to the overall uniformity for having a mostly evenly distributed particle-based morphology.

According to one embodiment of the present disclosure, the polyvinylidene-based binder may be an aqueous binder. Specifically, the polyvinylidene-based binder that is an aqueous binder is selected, and thus the manufacturing cost of the battery may be reduced by minimizing pollutants discharged during the preparation process of the separator.

According to the embodiment of the present disclosure, an adhesive polymer binder may be provided on the coating layer (130). Specifically, the adhesive polymer binder may be disposed on an opposite surface of the coating layer which is opposite to a surface adjacent to the porous polymer substrate. More specifically, the opposite surface of the coating layer is covered by the adhesive polymer binder. As described above, by providing the adhesive polymer binder on the coating layer (130), dry adhesive force and wet adhesive force to an electrode are improved respectively.

According to the embodiment of the present disclosure, the adhesive polymer binder may be particle-type, solution-type and the combination thereof. In the present specification, "particle-type" may define that the adhesive polymer binder keeps the particle phase by not being dissolved with an electrolyte inserted in a cell. In the present specification, " solution-type" may define that the adhesive polymer binder does not keep the particle phase by being dissolved with an electrolyte inserted in a cell. By select the sort of the adhesive polymer binder in the described above, dry adhesive force and wet adhesive force to an electrode are improved respectively.

According to the embodiment of the present disclosure, the adhesive polymer binder is provided on part of the coating layer (130). As described above, by providing the adhesive polymer binder on part of the coating layer, dry adhesive force and wet adhesive force to an electrode are improved respectively.

According to the embodiment of the present disclosure, the adhesive polymer binder is provided to more than 0 % or less than 100 % of area based on the total area of the coating layer. Specifically, the adhesive polymer binder is provided to 1 % and more or 99 % and less, 5 % and more or 95 % and less, 10 % and more or 90 % and less, 15 % and more or 85 % and less, 20 % and more or 80 % and less, 25 % and more or 75 % and less, 30 % and more or 70 % and less, 35 % and more or 65 % and less, 40 % and more or 60 % and less, or 45 % and more or 55 % and less of area based on the total area of the coating layer. The area provided by the adhesive polymer binder on the coating layer is adjusted within the above-described range, dry adhesive force and wet adhesive force to an electrode are improved respectively.

According to the embodiment of the present disclosure, the adhesive polymer binder may be same with the first polymer binder and the second polymer binder, or be different from the first polymer binder and the second polymer binder. The sort of the adhesive polymer binder is selected as the above-described, the adhesive force between the coating layer and the adhesive polymer binder may be adjusted, dissolution of the adhesive polymer binder by an electrolyte may be prevented, and resistance of a cell may be minimized.

According to the embodiment of the present disclosure, the adhesive polymer binder may be provided on part of the coating layer by spray method, bar coating method, spin coating method or deep coating method. The provided method of the adhesive polymer binder is selected as the above-described, the adhesive polymer binder is disposed on the coating layer easily.

According to one embodiment of the present disclosure, the halogen atoms may be fluorine atoms. As described above, the halogen atoms are selected as the fluorine atoms, and thus wet adhesive force of the separator may be improved, stiffness of the pouch type cell may be improved, and bending may be prevented.

According to one embodiment of the present disclosure, the metal atom may be one selected from the group consisting of Al, Ba, Ti, Pb, Zr, La, Mg, Nb, Sr, Si, Y, Zn, Sn, Sb, Pt and combinations thereof. Preferably, the metal atom may be Al (aluminum). The metal atom is selected from the above-described metal atoms, and thus heat resistance of the separator may be secured, wet adhesive force of the separator may be improved, stiffness of the pouch type cell may be improved, and bending may be prevented.

According to one embodiment of the present disclosure, the content of halogen atoms exposed from the surface of the coating layer 130 may be more than 0% by atom or more. According to one embodiment of the present disclosure, the content of halogen atoms exposed from the surface of the coating layer 130 may be 1% by atom or more and 10% by atom or less based on 100% by atom of the total atoms exposed from the surface of the coating layer 130. Specifically, the content of halogen atoms exposed from the surface of the coating layer 130 may be 2% by atom or more and 9% by atom or less, 3% by atom or more and 8% by atom or less, 4% by atom or more and 7% by atom or less, or 5% by atom or more and 6% by atom or less based on 100% by atom of the total atoms exposed from the surface of the coating layer 130. The content of halogen atoms exposed from the surface of the coating layer 130 is adjusted within the above-described range, and thus wet adhesive force of the separator may be improved, stiffness of the pouch type cell may be improved, and bending may be prevented.

According to one embodiment of the present disclosure, the content of metal atoms exposed from the surface of the coating layer 130 may be 15% by atom or more and 50% by atom or less based on 100% by atom of the total atoms exposed from the surface of the coating layer 130. Specifically, the content of metal atoms exposed from the surface of the coating layer 130 may be 20% by atom or more and 45% by atom or less, 25% by atom or more and 40% by atom or less, or 30% by atom or more and 35% by atom or less based on 100% by atom of the total atoms exposed from the surface of the coating layer 130. The content of metal atoms exposed from the surface of the coating layer 130 is adjusted within the above-described range, and thus heat resistance of the separator may be improved, wet adhesive force of the separator may be improved, stiffness of the pouch type cell may be improved, and banding may be prevented.

According to one embodiment of the present disclosure, the coating layer 130 may have a dry adhesive force of 35 gf/20 mm or more. Specifically, the coating layer may have a dry adhesive force of 35 gf/20 mm or more and 100 gf/20 mm or less, 40 gf/20 mm or more and 95 gf/20 mm or less, 45 gf/20 mm or more and 90 gf/20 mm or less, 50 gf/20 mm or more and 85 gf/20 mm or less, 55 gf/20 mm or more and 80 gf/20 mm or less, 60 gf/20 mm or more and 75 gf/20 mm or less, or 65 gf/20 mm or more and 70 gf/20 mm or less. As described above, the dry adhesive force of the coating layer is adjusted, and thus the assembling easiness may be improved in the process of assembling the electrode.

According to one embodiment of the present disclosure, the coating layer 130 may have a wet adhesive force of 10 gf/20 mm or more. Specifically, the coating layer may have a wet adhesive force of 10 gf/20 mm or more and 100 gf/20 mm or less, 20 gf/20 mm or more and 95 gf/20 mm or less, 30 gf/20 mm or more and 90 gf/20 mm or less, 40 gf/20 mm or more and 85 gf/20 mm or less, 50 gf/20 mm or more and 80 gf/20 mm or less, 60 gf/20 mm or more and 75 gf/20 mm or less, or 65 gf/20 mm or more and 70 gf/20 mm or less. As described above, the wet adhesive force of the coating layer is adjusted, and thus stiffness of the pouch type cell may be improved, and bending may be prevented.

In this specification, the dry adhesive force of the coating layer may mean one obtained by measuring the strength at which the separator portion of the specimen is peeled at an angle of 180° at a rate of 150 mm/min at 25°C after cutting the separator into 70 mm (length) × 20 mm (width) and laminating the prepared electrode and separator using a press at conditions of 60°C, 6.5 MPa, and 1 sec to fabricate a specimen, attaching and fixing the prepared specimen to a glass plate using a double-sided tape, and disposing the specimen so that the electrode faces the glass plate at this time.

In this specification, the wet adhesive force of the coating layer may mean one obtained by measuring the strength at which the separator portion of the specimen is peeled at an angle of 90° at a rate of 200 mm/min at 25°C after cutting the separator into 70 mm (length) × 20 mm (width) and laminating the prepared electrode and separator using a press at conditions of 60°C, 6.5 MPa, and 1 sec to fabricate a specimen, loading the prepared specimen into the battery case together with the electrolyte (one in which ethylene carbonate and ethyl methylate are mixed at a volume ratio of 7:3 and prepared at a concentration of 1M LiPF6), maintaining it for 4 hours to impregnate the specimen with the electrolyte, taking it out of the case, attaching and fixing the prepared specimen to a glass plate using a double-sided tape, and disposing the specimen so that the electrode faces the glass plate at this time.

One embodiment of the present disclosure provides a method for manufacturing a separator for an electrochemical device, the method including the steps of: mixing a slurry for a coating layer 130 containing first polymer binder particles 131, second polymer binder particles 133, and inorganic particles 135 (S10); applying the slurry for the coating layer to at least one surface of the porous polymer substrate 110 (S30); and providing a coating layer 130 by drying the slurry for the coating layer (S50). The slurry may remain wet to form at least two layers on the porous polymer substrate by gravity before drying to form the coating layer. After application of the slurry for the coating layer to one surface of the porous polymer substrate 110 (S30), the slurry may remain wet, e.g. for at least 1 min or more, for phase separation by gravity of the coating layer. Phase separation by gravity may mean that the slurry may contain more than one phase and separate due to different densities of the first polymer binder particles 131, second polymer binder particles 133, and inorganic particles 135 (S10). Inorganic particles 135 (S10) may be more dense than the first polymer binder particles 131, second polymer binder particles 133, so that inorganic particles 135 (S10) may form a bottom phase and the first polymer binder particles 131, second polymer binder particles 133. Thereupon, phase separation does not mean that the phases need to form sharp separated phases, it may be already sufficient if a concentration gradient of the first polymer binder particles 131, second polymer binder particles 133, or inorganic particles 135 (S10) is formed between an upper phase and a lower phase.

The method for manufacturing a separator for an electrochemical device according to one embodiment of the present disclosure may maintain adhesive force in a lamination process with electrodes, and may improve stiffness or prevent pouch-type cells from bending by maintaining adhesive force after battery activation.

According to one embodiment of the present disclosure, the method for manufacturing the separator 100 for an electrochemical device includes a step of mixing a slurry for a coating layer containing first polymer binder particles 131, second polymer binder particles 133, and inorganic particles 135 (S10). As described above, the method includes the step (S10) of mixing a slurry for a coating layer containing first polymer binder particles 131, second polymer binder particles 133, and inorganic particles 135, and thus the coating layer may be easily formed on the separator.

According to one embodiment of the present disclosure, a polymer binder resin, that is, the first polymer binder particles 131 and the second polymer binder particles 133 may be dispersed in water, which is an appropriate dispersion medium, to prepare a polymer emulsion, thereby providing a slurry for a coating layer. Pollutants generated during the manufacturing process may be minimized by, as described above, dispersing the first polymer binder particles 131 and the second polymer binder particles 133 in water, which is an appropriate dispersion medium, to prepare a polymer emulsion, thereby providing a slurry for a coating layer. In this specification, the dispersion medium is used in the process of preparing the slurry and may mean a solvent.

According to one embodiment of the present disclosure, inorganic particles 135 may be added and dispersed in the polymer emulsion. The content ratio of the inorganic particles and the polymer binder particles is as described above, and is appropriately adjusted in consideration of the thickness, pore size, and porosity of the coating layer according to one embodiment of the present disclosure finally manufactured.

According to one embodiment of the present disclosure, a slurry for a coating layer may be prepared by dispersing the first polymer binder particles 131, the second polymer binder particles 133, and the inorganic particles 135 in water which is a dispersion medium.

According to one embodiment of the present disclosure, the solid content of the slurry for the coating layer may be 10% by weight or more and 50% by weight or less. Specifically, the solid content of the slurry for the coating layer may be 15% by weight or more and 40% by weight or less, 20% by weight or more and 35% by weight or less, or 15% by weight or more and 40% by weight or less. The solid content of the slurry for the coating layer is adjusted within the above-described range, and thus the workability of the coating layer manufacturing process may be improved.

According to one embodiment of the present disclosure, the method for manufacturing the separator 100 for an electrochemical device includes a step of applying the slurry for the coating layer to at least one surface of the porous polymer substrate 110 (S30). As described above, the step of applying the slurry for the coating layer to at least one surface of the porous polymer substrate 110 is included, and thus the coating layer 130 may be formed with one time application. Due to the separation between the inorganic particles and the polymer binder particles, the slurry for the coating layer has an excessive amount of inorganic particles 135 in the portion close to the porous polymer substrate 110, and has an excessive amount of the polymer binder particles 131 and 133 in the portion far from the porous polymer substrate 110, which faces the porous polymer substrate 110, so that adhesive force to the electrode may be improved, and porosity of the separator may be improved. In this specification, the presence of the excessive amount may mean the content exceeding 50% by weight in the corresponding portion, and the portion close to the porous polymer substrate 110 and the portion far from the porous polymer substrate 110 may be divided based on an imaginary line occupying 1/2 the thickness of the coating layer.

According to one embodiment of the present disclosure, the method of applying the slurry for the coating layer to the surface of the porous polymer substrate 110 is not particularly limited to any one method, and a conventional method known in the art may be used. For example, various methods such as dip coating, die coating, roll coating, comma coating, or a combination thereof may be used.

According to one embodiment of the present disclosure, the method for manufacturing the separator 100 for an electrochemical device includes a step (S50) of providing a coating layer 130 by drying the slurry for the coating layer. As described above, the step (S50) of providing a coating layer 130 by drying the slurry for the coating layer is included, and thus damage to the coating layer may be minimized, and the dispersion medium contained in the slurry may be easily removed.

According to one embodiment of the present disclosure, the temperature of the drying process may have a temperature of 25°C or more and 75°C or less. Specifically, the drying process may have a temperature of 30°C or more and 70°C or less, 35°C or more and 65°C or less, 40°C or more and 60°C or less, or 45°C or more and 55°C or less. The temperature of the drying process is adjusted within the above-described range, denaturation of the porous polymer substrate may be prevented, and the dispersion medium may be effectively removed.

According to one embodiment of the present disclosure, in the drying process, time conditions are appropriately set to minimize occurrence of surface defects of the coating layer 130. For the drying, a drying auxiliary device such as a drying oven or hot air may be used within an appropriate range.

According to one embodiment of the present disclosure, the separator 100 is manufactured into an electrochemical device by a lamination process in which the separator 100 is interposed between an anode and a cathode and bound by applying heat and/or pressure. In one embodiment of the present disclosure, the lamination process may be performed by a roll press device including a pair of pressure rollers. That is, interlayer binding may be achieved by sequentially stacking an anode, a separator, and a cathode, and inputting them between the pressure rollers. At this time, the lamination process may be performed by a method of hot pressing.

One embodiment of the present disclosure provides an electrochemical device 1000 including: a cathode 300; an anode 500; and a separator 100 interposed between the cathode 300 and the anode 500.

The electrochemical device 1000 according to one embodiment of the present disclosure may reduce manufacturing costs, and may facilitate the manufacture of the electrochemical device due to improved adhesive force of the separator.

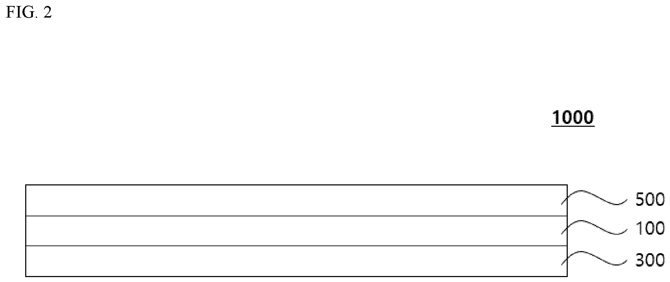

FIG. 2 is a schematic view of an electrochemical device 1000 according to one embodiment of the present disclosure. Referring to FIG. 2, an electrochemical device according to one embodiment of the present disclosure will be described in detail.

In one embodiment of the present disclosure, the electrochemical device is a device that converts chemical energy into electrical energy by an electrochemical reaction, and is a concept encompassing a primary battery and a secondary battery. In this specification, the secondary battery is capable of charging and discharging, and means a lithium secondary battery, a nickel-cadmium battery, a nickel-hydrogen battery, or the like. The lithium secondary battery is one which uses lithium ions as an ion conductor, and examples thereof may include a non-aqueous electrolyte secondary battery including a liquid electrolyte, an all-solid-state battery including a solid electrolyte, a lithium polymer battery including a gel polymer electrolyte, a lithium metal battery in which a lithium metal is used as an anode, and the like, but are not limited thereto.

According to one embodiment of the present disclosure, the cathode includes a cathode current collector and a cathode active material layer containing a cathode active material, a conductive material, and a binder resin on at least one surface of the current collector. The cathode active material may include: layered compounds such as lithium manganese oxide composites ($LiMn_2O_4$, $LiMnO_2$, etc.), lithium cobalt oxide ($LiCoO_2$), and lithium nickel oxide ($LiNiO_2$), or compounds substituted with one or more transition metals; lithium manganese oxides such as the formula $Li_{1+x}Mn_{2-x}O_4$ (where x is 0 to 0.33), $LiMnO_3$, $LiMn_2O_3$, and $LiMnO_2$; lithium copper oxide ($Li_2CuO_2$); vanadium oxides such as LiVsOs, $LiV_3O_4$, $V_2O_5$, and $Cu_2V_2O_7$; Ni site type lithium nickel oxides represented by the formula $LiNi_{1-x}MxO_2$, where M = Co,

Mn, Al, Cu, Fe, Mg, B, or Ga, and x = 0.01 to 0.3; lithium manganese oxide composites represented by the formula $LiMn_{1-x}M_xO_2$ (where M = Co, Ni, Fe, Cr, Zn, or Ta, and x = 0.01 to 0.1) or $Li_2Mn_3MO_8$ (where M = Fe, Co, Ni, Cu, or Zn); $LiMn_2O_4$ in which a part of Li of the formula is substituted with an alkaline earth metal ions; disulfide compounds; $Fe_2(MoO_4)_3$; or mixtures of two or more thereof.

According to one embodiment of the present disclosure, the anode includes an anode current collector and an anode active material layer containing an anode active material, a conductive material, and a binder resin on at least one surface of the current collector. The anode may include, as the anode active material, one selected from: carbon such as lithium metal oxide, non-graphitizable carbon, and graphite-based carbon; metal oxide composites such as $LixFe_2O_3$ (0≤x≤1), $Li_xWO_2$ (0≤x≤1), and $Sn_xMe_{1-x}Me'_yO_z$ (Me: Mn, Fe, Pb, Ge; Me': Al, B, P, Si, Group 1, Group 2 and Group 3 elements of the periodic table, halogens; 0<x≤1; 1≤y≤3; 1≤z≤8); lithium metal; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymers such as polyacetylene; Li-Co-Ni based materials; and titanium oxides; or mixtures of two or more thereof.

According to one embodiment of the present disclosure, the conductive material may be, for example, any one selected from the group consisting of graphite, carbon black, carbon fiber or metal fiber, metal powder, conductive whisker, conductive metal oxide, activated carbon, and polyphenylene derivatives, or mixtures of two or more conductive materials thereof. More specifically, it may be one selected from the group consisting of natural graphite, artificial graphite, super-p, acetylene black, ketjen black, channel black, furnace black, lamp black, thermal black, denka black, aluminum powder, nickel powder, zinc oxide, potassium titanate, and titanium oxide, or mixtures of two or more conductive materials thereof.

According to one embodiment of the present disclosure, the current collector is not particularly limited as long as it does not cause chemical change in the concerned battery and has high conductivity. For example, stainless steel, copper, aluminum, nickel, titanium, calcined carbon, or aluminum or stainless steel, which is surface-treated with carbon, nickel, titanium, silver, or the like on the surface thereof, may be used.

According to one embodiment of the present disclosure, a polymer commonly used in electrodes in the art may be used as the binder resin. Nonlimiting examples of such a binder resin may include poly(vinylidene fluoride-co-hexafluoropropylene), polyvinylidene fluoride-co-trichloroethylene, polymethyl methacrylate, polyethylhexyl acrylate, polybutylacrylate, polyacrylonitrile, polyvinylpyrrolidone, polyvinylacetate, ethylene vinyl acetate copolymer (polyethylene-co-vinyl acetate), polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, and the like, but is not limited thereto.

According to one embodiment of the present disclosure, the cathode contains a cathode active material layer, and the coating layer of the separator is in direct contact with the cathode active material layer.

The coating layer of the present description may have an improved heat shrinkage rate. Thereupon, the minimized heat shrinkage rate of the coating layer may help to maintain the physical integrity of the separator-cathode interface during temperature changes induced by charging and discharging cycles. This, in turn, may lead to improved electrochemical performance, such as better capacity retention and cycling stability. Thus, the stabilized separator-cathode interface may lead to a longer lifespan of the electrochemical device which may be achieved due to reduced mechanical stress and enhanced cycling stability.

According to one embodiment of the present disclosure, the anode contains an anode active material layer and the coating layer of the separator is in direct contact with the anode active material layer.

The minimized heat shrinkage rate of the coating layer may help to maintain the physical integrity of the separator-anode interface during temperature changes induced by charging and discharging cycles. This, in turn, may lead to improved electrochemical performance, such as better capacity retention and cycling stability. Thus, the stabilized separator-anode interface may lead to a longer lifespan of the electrochemical device which may be achieved due to reduced mechanical stress and enhanced cycling stability.

According to one embodiment of the present disclosure, the cathode slurry for preparing the cathode active material layer may contain a dispersant, and the dispersant may be a pyrrolidone-based compound. Specifically, it may be N-methylpyrrolidone (ADC-01, LG Chem).

According to one embodiment of the present disclosure, the dispersant may be contained in the cathode slurry in an amount of more than 0 part by weight and 0.5 parts by weight or less based on 100 parts by weight of the cathode slurry. Specifically, the dispersant may be contained in the cathode slurry in an amount of more than 0.05 parts by weight and 0.4 parts by weight or less based on 100 parts by weight of the cathode slurry.

According to one embodiment of the present disclosure, the anode slurry for preparing the anode active material layer may contain a dispersant, and the dispersant may be a polypyrrolidone-based compound. Specifically, the dispersant may be polyvinylpyrrolidone (Junsei, Japan).

According to one embodiment of the present disclosure, the dispersant may be contained in the anode slurry in an amount of more than 0 part by weight and 0.5 parts by weight or less based on 100 parts by weight of the anode slurry. Specifically, the dispersant may be contained in the anode slurry in an amount of more than 0.05 parts by weight and 0.4 parts by weight or less based on 100 parts by weight of the anode slurry.

According to one embodiment of the present disclosure, a battery may be manufactured by loading the electrochemical device prepared as described above into an appropriate case and injecting an electrolyte.

According to one embodiment of the present disclosure, the electrolyte is a salt having a structure of $A^+B^-$, wherein salts in which $A^+$ includes ions consisting of alkali metal cations such as $Li^+$, $Na^+$, and $K^+$, or combinations thereof, and $B^-$ includes ions consisting of anions such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, and $C(CF_2SO_2)_3^-$, or combinations thereof may include those dissolved or dissociated in organic solvents composed of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone ($\gamma$-butyrolactone), or mixtures thereof, but are not limited thereto.

One embodiment of the present disclosure provides a battery module including a battery including the electrochemical device as a unit cell, a battery pack including the battery module, and a device including the battery pack as a power source. Specific examples of the device may include: a power tool moved by an electric motor by receiving power; electric cars including electric vehicles (EVs), hybrid electric vehicles (HEVs), plug-in hybrid electric vehicles (PHEVs), and the like; electric two-wheeled vehicles including electric bicycles (E-bikes) and electric scooters (E-scooters); electric golf carts; a power storage system; and the like, but are not limited thereto.

Hereinafter, Examples will be described in detail to explain the present disclosure in detail. However, embodiments according to the present disclosure can be modified in various different forms, and the scope of the present disclosure is not construed as being limited to Examples described below. The embodiments of this specification are provided to more completely explain the present disclosure to those skilled in the art.

**<Example 1>**

A polyethylene resin (weight average molecular weight of 900,000) was extruded, and a porous polymer substrate (total thickness of about 9 $\mu$m, porosity of 40% by volume) was manufactured by a wet method.

A slurry for a coating layer (solid content concentration of 20% by weight) was prepared by inputting styrene-butyl acrylate (glass transition temperature of 40°C), which is an acrylic binder, as first polymer binder particles with a particle diameter of 500 nm, a copolymer of PVdF and HFP, that has 5% by weight of a substitution degree (weight ratio in which HFP is contained in a PVdF-based polymer), which is a polyvinylidene-based binder, as second polymer binder particles with a particle diameter of 500 nm, and inorganic particles ($Al_2O_3$, particle diameter of 500 nm) into water and dispersing them. The first polymer binder particles and the second polymer binder particles had a weight ratio of 1:1, and the polymer binder particles and the inorganic particles had a weight ratio of 20:80. The obtained coating layer contains 6 wt.% fluorine atoms based on the total weight of the coating layer composition.

The slurry for the coating layer was applied to both surfaces of the porous polymer substrate by a method of bar coating using a doctor blade, and dried with a wind at 50°C using a heat gun to form a coating layer having a thickness of 3 $\mu$m on each surface so that a separator having a total thickness of 15 $\mu$m was manufactured.

Thereafter, the surface of the coating layer was measured by energy dispersive X-ray spectroscopy (EDS) (Hitachi, S-4800).

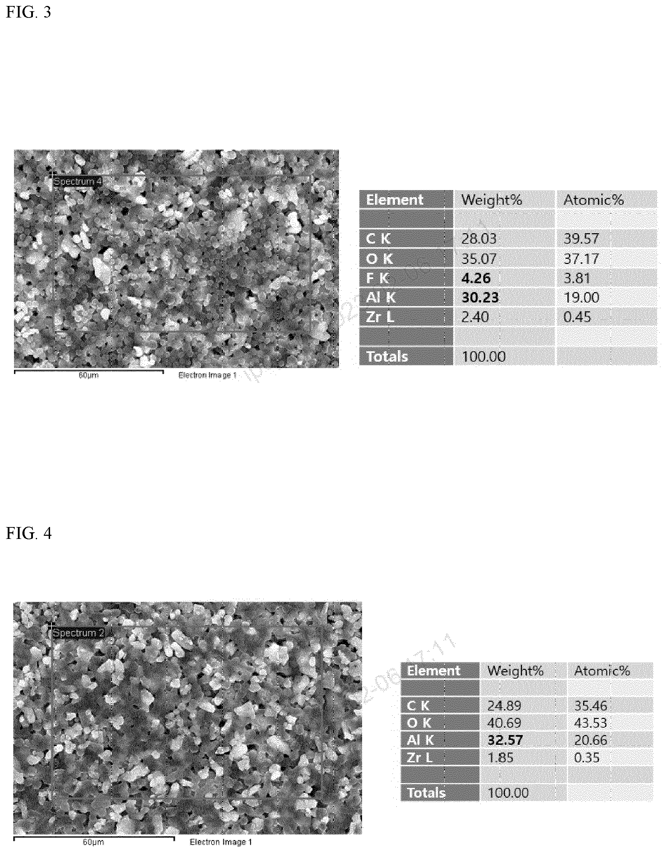

FIG. 3 is a photograph of the surface of Example 1 according to one embodiment of the present disclosure taken by energy dispersive X-ray spectroscopy (EDS) and a table showing the contents of elements disposed on the surface. Referring to FIG. 3, the content of fluorine atoms was 4.26% by weight and the content of aluminum atoms was 30.23% by weight on the surface of the coating layer of Example 1 above (see table 1).

**<Comparative Example 1>**

A separator was manufactured in the same manner as in Example 1 except that only styrene-butyl acrylate (glass transition temperature of 40°C), which is an acrylic binder, was used as the first polymer binder particles, for Comperative Example 1. The polymer binder particles and the inorganic particles had a weight ratio of 20:80. The obtained coating layer contains 0 wt.% fluorine atoms based on the total weight of the coating layer composition.

FIG. 4 is a photograph of the surface of Comparative Example 1 taken by EDS and a table showing the contents of elements disposed on the surface. Referring to FIG. 4, the content of fluorine atoms was 0% by weight and the content of aluminum atoms was 32.57% by weight on the surface of the coating layer of Comparative Example 1 above (see table 1).

**<Comparative Example 2>**

A separator was manufactured in the same manner as in Example 1 except that only a copolymer of PVdF and HFP, that has 5% by weight of a substitution degree (weight ratio in which HFP is contained in a PVdF-based polymer), which is a polyvinylidene-based binder, was used as second polymer binder particles for Comparative Example 2. The polymer binder particles and the inorganic particles had a weight ratio of 20:80. The obtained coating layer contains 12 wt.% fluorine atoms based on the total weight of the coating layer composition.

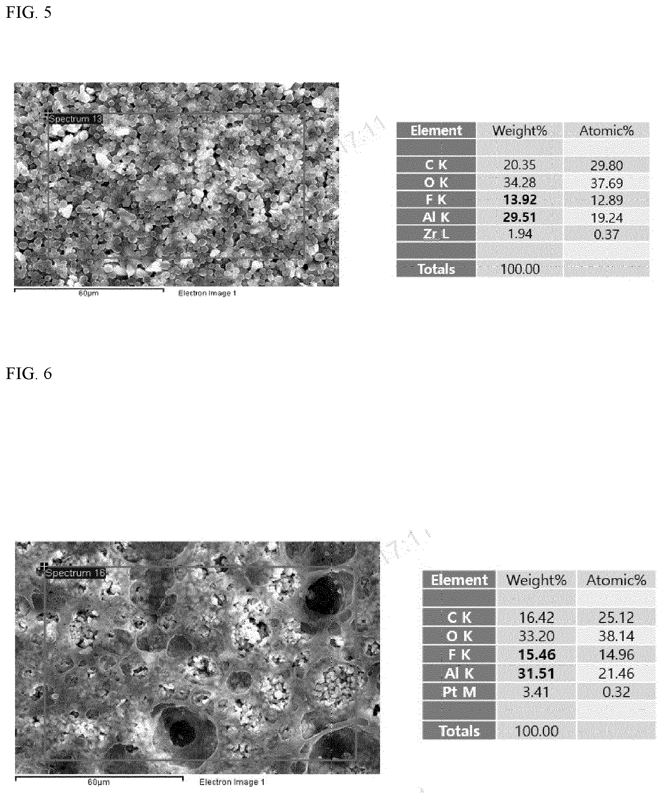

FIG. 5 is a photograph of the surface of Comparative Example 2 taken by EDS and a table showing the contents of elements disposed on the surface. Referring to FIG. 5, the content of fluorine atoms was 13.92% by weight and the content of aluminum atoms was 29.51% by weight on the surface of the coating layer of Comparative Example 2 (see table 1).

**<Comparative Example 3>**

A separator was manufactured in the same manner as in Example 1 above except that the slurry for the coating layer was prepared by inputting and dissolving in acetone instead of water in Example 1 above. Therein, it can be seen that the second polymer binder, i.e. a copolymer of PVdF and HFP, foms a network-structure, in which particles are bound and gaps of at least 10 μm are formed on the surface, which do not contain any particles. Thus, the particles are unevenly distributed over the surface of the separator. The obtained coating layer contains 6 wt.% fluorine atoms based on the total weight of the coating layer composition.

FIG. 6 is a photograph of the surface of Comparative Example 3 taken by EDS and a table showing the contents of elements disposed on the surface. Referring to FIG. 6, the content of fluorine atoms was 15.46% by weight and the content of aluminum atoms was 31.51% by weight on the surface of the coating layer of Comparative Example 3 above (see table 1).

**<Comparative Example 4>**

Polyethylene resin (weight average molecular weight of 900,000) was extruded, and a porous polymer substrate (total thickness of about 9 μm) was prepared by a wet method.

$Al_2O_3$ powder having a $D_{50}$ particle diameter of 500 nm was prepared as inorganic particles. An acrylic emulsion (CSB-130, Toyo Ink Co.) was prepared as first polymer binder particles, and sodium carboxymethyl cellulose (CMC-Na) (SG-L02, GL Chem Co.) was prepared as a dispersant. The obtained coating layer contains 0 wt.% fluorine atoms based on the total weight of the coating layer composition.

After adding the prepared inorganic particles, first polymer binder particles, and dispersant to water at a weight ratio of 97:2: 1, the inorganic particles were crushed and dispersed to prepare a slurry for a coating layer.

Both surfaces of the porous polymer substrate were coated with the slurry for the coating layer and dried to form a coating layer.

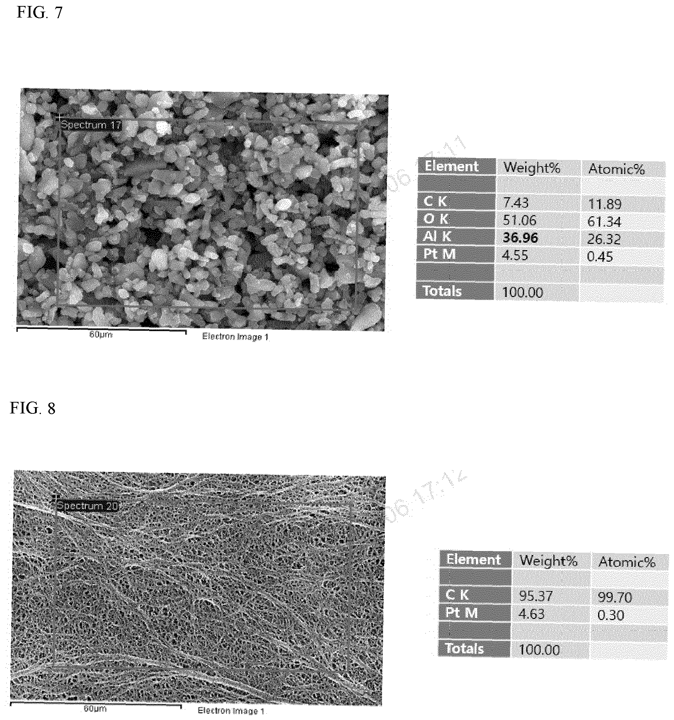

FIG. 7 is a photograph of the surface of Comparative Example 4 taken by EDS and a table showing the contents of elements disposed on the surface. Referring to FIG. 7, the content of fluorine atoms was 0% by weight and the content of aluminum atoms was 36.96% by weight on the surface of the coating layer of Comparative Example 4 (see table 1).

**<Comparative Example 5>**

A separator was manufactured in the same manner as in Example 1 except that the coating layer was not formed in Example 1 above.

FIG. 8 is a photograph of the surface of Comparative Example 5 taken by EDS and a table showing the contents of elements disposed on the surface. Referring to FIG. 8, the content of fluorine atoms was 0% by weight and the content of aluminum atoms was 0% by weight on the surface of the coating layer of Comparative Example 5 (see table 1).

**<Example 2>**

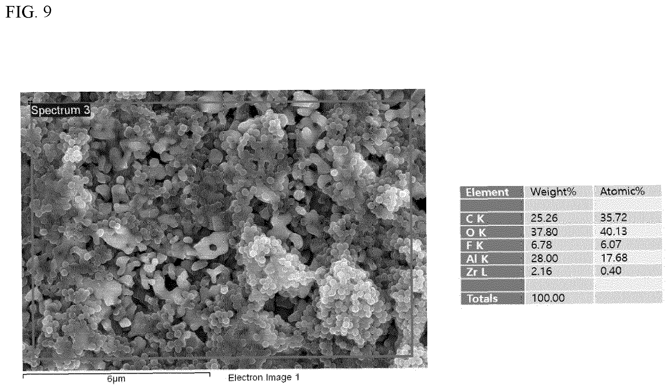

To manufacture a separator, on the coating layer of the separator manufactured in Comparative Example 4, PVdF-HFP(amount of HFP 12 wt%, particle diameter of 300 nm) as the adhesive polymer binder, was coated by wire bar coating method in order that the adhesive polymer binder is provided to 50 % of area based the total area of the coating layer and the separator was manufactured. FIG. 9 is a photograph of the surface of Example 2 according to one embodiment of the present disclosure taken by EDS and a table showing the contents of elements disposed on the surface. Referring to FIG. 9, the content of fluorine atoms was 6.78% by weight and the content of aluminum atoms was 28.00% by weight on the surface of the coating layer of Example 2 above (see table 1).

Table 1: Content of elements measured by EDS

| | E1 | | E2 | | CE1 | | CE2 | | CE3 | | CE4 | | CE5 | |
|---|---|---|---|---|---|---|---|---|---|---|---|---|---|---|
| | Wt% | Atm% | Wt% | Atm% | Wt% | Atm% | Wt% | Atm% | Wt% | Atm% | Wt% | Atm% | Wt% | Atm% |
| C | 28,03 | 39,57 | 25,26 | 35,72 | 24,89 | 35,46 | 20,35 | 29,8 | 16,42 | 25,12 | 7,43 | 11,89 | 95,37 | 99,7 |
| O | 35,07 | 37,17 | 37,80 | 40,13 | 40,69 | 43,53 | 34,28 | 37,69 | 33,2 | 38,14 | 51,06 | 61,34 | | |
| F | 4,26 | 3,81 | 6,78 | 6,07 | | | 13,92 | 12,89 | 15,46 | 14,96 | | | | |
| Al | 30,23 | 19 | 28,00 | 17,68 | 32,57 | 20,66 | 29,51 | 19,24 | 31,51 | 21,46 | 26,32 | 26,32 | | |

The above table 1 shows the content of elements measured by EDS of examples 1 and 2, and comparative examples 1 to 5. The detected atoms are given in wt% (weight%) and atm% (atomic%) based on the total amount, i.e weight or atoms, of elements measured on the surface by EDS.

**<Manufacture of Electrochemical Devices>**

1) Manufacture of Cathode

A cathode active material ($LiNi_{0.8}Mn_{0.1}Co_{0.1}O_2$), a conductive material (carbon black), a dispersant (N-methylpyrrolidone, ADC-01, LG Chem), and a binder resin (a mixture of PVDF-HFP and PVDF) were mixed with water at a weight ratio of 97.5:0.7:0.14:1.66 to prepare a slurry for a cathode active material layer having a concentration of 50% by weight of the remaining components except for water. Next, the slurry was applied to the surface of an aluminum thin film (thickness of 10 $\mu$m) and dried to prepare a cathode having a cathode active material layer (thickness of 120 $\mu$m).

2) Manufacture of anode

Graphite (a blend of natural graphite and artificial graphite), a conductive material (carbon black), a dispersant (polyvinylpyrrolidone, Junsei, Japan), and a binder resin (a mixture of PVDF-HFP and PVDF) were mixed with water at a weight ratio of 97.5:0.7:0.14:1.66 to prepare a slurry for an anode active material layer having a concentration of 50% by weight of the remaining components except for water. Next, the slurry was applied to the surface of a copper thin film (thickness of 10 $\mu$m) and dried to prepare an anode having an anode active material layer (thickness of 120 $\mu$m).

**<Experimental Example 1: Dry Adhesive Force Measurement>**

The electrodes and the separators prepared by cutting the separators of Example 1 and Comparative Examples 1 to 5 above into 70 mm (length) $\times$ 20 mm (width) were laminated using a press at conditions of 60°C, 6.5 MPa, and 1 see to fabricate specimens. The prepared specimens were attached and fixed to a glass plate using a double-sided tape, and at this time, the specimens were disposed so that the electrodes faced the glass plate. The separator portions of the specimens were peeled at an angle of 180° at a rate of 150 mm/min at 25°C, and the strength of each of the cathode and anode at this time was measured and summarized in Table 2 below.

**<Experimental Example 2: Wet Adhesive Force Measurement >**

The electrodes and the separators prepared by cutting the separators of Example 1 and Comparative Examples 1 to 5 above into 70 mm (length) $\times$ 20 mm (width) were laminated using a press at conditions of 60°C, 6.5 MPa, and 1 see to fabricate specimens. The prepared specimens were loaded into the battery case together with the electrolyte and maintained for 4 hours, thereby impregnating the specimens with the electrolyte. A mixture in which ethylene carbonate and ethyl methylate were mixed at a volume ratio of 7:3 and prepared at a concentration of 1M $LiPF_6$ was used as the electrolyte. Thereafter, the specimens were taken out of the case and attached and fixed to the glass plate using a double-sided tape, and at this time, the specimens were disposed so that the electrodes faced the glass plate. The separator portions of the specimens were peeled at an angle of 90° at a rate of 200 mm/min at 25°C, and the strength of each of the cathode and anode at this time was measured and summarized in Table 2 below.

**<Experimental Example 3: Thermal Shrinkage Rate at 130°C>**

Thermal shrinkage rates were calculated by cutting the separators of Example 1 and Comparative Examples 1 to 5 above into a size of 50 mm (length) $\times$ 50 mm (width) to prepare specimens, maintaining them in an oven heated to 130°C for 30 minutes, and then recovering the specimens and measuring the changed lengths thereof for the machine direction (MD) and the transverse direction (TD):

$$\text{Heat shrinkage rate (\%) at } 130°C = \{(\text{Dimension before shrinkage} - \text{Dimension after shrinkage})/\text{Dimension before shrinkage}\} \times 100$$

[Table 2]

| | Cathode-separator dry adhesive force (gf/20 mm) | Anode-separator dry adhesive force (gf/20 mm) | Cathode-separator wet adhesive force (gf/20 mm) | Anode-separator wet adhesive force (gf/20 mm) | Heat shrinkage rate at 130°C (%, MD/TD) |
|---|---|---|---|---|---|
| Example 1 | 45 | 40 | 12 | 10 | 4/3 |
| Example 2 | 50 | 40 | 13 | 11 | 1/1 |
| Comparative Example 1 | 25 | 32 | 0 | 1 | 4/4 |
| Comparative Example 2 | 20 | 15 | 10 | 1 | 5/4 |
| Comparative Example 3 | - | - | - | - | 5/5 |
| Comparative Example 4 | 0 | 0 | 0 | 0 | 1/1 |
| Comparative Example 5 | 0 | 0 | 0 | 0 | 50/49 |

Referring to Table 2, it was confirmed that Examples 1 and 2 according to one embodiment of the present disclosure have both improved dry adhesive force and wet adhesive force and is excellent in heat shrinkage rate.

In contrast, since the surface of the coating layer did not contain a halogen element in Comparative Example 1, it was confirmed that the wet adhesive force rapidly decreased. Since the surface of the coating layer contained an excessive amount of the halogen element in Comparative Example 2, it was confirmed that the manufacturing cost increased during the process of manufacturing the separator, and it was confirmed that the dry adhesive force decreased and the wet adhesive force to the anode rapidly decreased. Since separate equipment for solvent treatment using acetone, which is an organic solvent, during the manufacturing process of the separator is required in Comparative Example 3, it was confirmed that the manufacturing cost increased. In Comparative Example 4, it was confirmed that the coating layer contained an excessive amount of inorganic materials, and the adhesive layer did not exist, and thus there was no adhesive force to the electrode. In Comparative Example 5, it was also confirmed that the coating layer and the adhesive layer did not exist, and thus there was no adhesive force to the electrode, and it was confirmed that heat shrinkage occurred rapidly at high temperatures.

Therefore, the separator of an electrochemical device according to one embodiment of the present disclosure can improve both dry adhesive force and wet adhesive force and heat resistance by adjusting the weight of halogen atoms and metal atoms exposed to the coating layer.

[Detailed Description of Main Elements]

100: Separator for electrochemical device
110: Porous polymer substrate
130: Coating layer
131: First polymer binder particles
133: Second polymer binder particles
135: Inorganic particles
300: Cathode
500: Anode
1000: Electrochemical device

Claims

1. A separator for an electrochemical device, comprising:

a porous polymer substrate; and

a coating layer provided on at least one surface of the porous polymer substrate and containing first polymer binder particles, second polymer binder particles, and inorganic particles,

wherein the content of halogen atoms exposed from the surface of the coating layer, which is the opposite surface of one surface provided with the porous polymer substrate, is 10% by weight or less based on 100% by weight of the total atoms exposed from the surface of the coating layer; and

the content of metal atoms exposed from the surface of the coating layer, is 20% by weight or more based on 100% by weight of the total atoms exposed from the surface of the coating layer.

2. The separator according to claim 1, wherein the ratio of the content of halogen atoms exposed from the surface of the coating layer in wt% based on 100% by weight of the total atoms exposed from the surface of the coating layer and the content of halogen atoms in the coating layer in wt% based on 100% by weight of the total atoms in the coating layer, is in the range of 0.5 to 2.5.

3. The separator according to one of the preceding claims, wherein the ratio of metal atoms exposed from the surface of the coating layer in wt% based on 100% by weight of the total atoms exposed from the surface of the coating layer and halogen atoms exposed from the surface of the coating layer in wt% based on 100% by weight of the total atoms exposed from the surface of the coating layer, is in the range of 2.5 and 10.

4. The separator according to one of the preceding claims, wherein the content of halogen atoms exposed from the surface of the coating layer, is 1% by weight or more and 10% by weight or less based on 100% by weight of the total atoms exposed from the surface of the coating layer.

5. The separator according to one of the preceding claims, wherein the content of metal atoms exposed from the surface of the coating layer, is 20% by weight or more and 50% by weight or less based on 100% by weight of the total atoms exposed from the surface of the coating layer.

6. The separator according to one of the preceding claims, wherein the surface of the coating layer is evenly distributed porous.

7. The separator according to one of the preceding claims, wherein the surface of the coating layer has mostly an evenly distributed particle-based morphology.

8. The separator according to one of the preceding claims, wherein the first polymer binder particles are acrylic binder particles.

9. The separator according to one of the preceding claims, wherein the second polymer binder particles are particles of a copolymer of polyvinylidene difluoride and hexafluoropropylene.

10. The separator according to one of the preceding claims, wherein the halogen atom is a fluorine atom.

11. The separator according to one of the preceding claims, wherein the metal atom is one selected from the group consisting of Al, Ba, Ti, Pb, Zr, La, Mg, Nb, Sr, Si, Y, Zn, Sn, Sb, Pt and combinations thereof, preferably Al, and/ or wherein the metal atom is derived from the inorganic particles of the coating layer, wherein the inorganic particles are selected from the group consisting of $BaTiO_3$, $Pb(Zr,Ti)O_3$ (PZT), $Pb_{1-x}La_xZr_{1-y}Ti_yO_3$ (PLZT, 0<x<1, 0< y<1), $Pb(Mg_{1/3}Nb_{2/3})O_3$-$PbTiO_3$ (PMN-PT), Hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, SiC, $Al(OH)_3$, $TiO_2$, aluminum peroxide, zinc tin hydroxide ($ZnSn(OH)_6$), tin-zinc oxide ($Zn_2SnO_4$, $ZnSnO_3$), antimony trioxide ($Sb_2O_3$), antimony tetraoxide ($Sb_2O_4$), antimony pentoxide ($Sb_2O_5$) and combinations thereof, preferably $Al_2O_3$.

12. The separator according to one of the preceding claims, wherein the coating layer may have a dry adhesive force of 35 gf/20 mm or more.

13. The separator according to one of the preceding claims, wherein the coating layer may have a wet adhesive force of 10 gf/20 mm or more.

14. An electrochemical device comprising: a cathode; an anode; and the separator of any one of claims 1 to 13 interposed between the cathode and the anode.

15. The electrochemical device according to claim 14, wherein the cathode contains a cathode active material layer, and the coating layer of the separator is in direct contact with the cathode active material layer; and / or
wherein the anode contains an anode active material layer and the coating layer of the separator is in direct contact with the anode active material layer.

FIG. 1A

FIG. 1B

FIG. 2

1000

FIG. 3

| Element | Weight% | Atomic% |
|---|---|---|
|  |  |  |
| C K | 28.03 | 39.57 |
| O K | 35.07 | 37.17 |
| F K | **4.26** | 3.81 |
| Al K | **30.23** | 19.00 |
| Zr L | 2.40 | 0.45 |
|  |  |  |
| Totals | 100.00 |  |

FIG. 4

| Element | Weight% | Atomic% |
|---|---|---|
|  |  |  |
| C K | 24.89 | 35.46 |
| O K | 40.69 | 43.53 |
| Al K | **32.57** | 20.66 |
| Zr L | 1.85 | 0.35 |
|  |  |  |
| Totals | 100.00 |  |

FIG. 5

| Element | Weight% | Atomic% |
|---------|---------|---------|
|         |         |         |
| C K     | 20.35   | 29.80   |
| O K     | 34.28   | 37.69   |
| F K     | **13.92** | 12.89 |
| Al K    | **29.51** | 19.24 |
| Zr L    | 1.94    | 0.37    |
|         |         |         |
| Totals  | 100.00  |         |

FIG. 6

| Element | Weight% | Atomic% |
|---------|---------|---------|
|         |         |         |
| C K     | 16.42   | 25.12   |
| O K     | 33.20   | 38.14   |
| F K     | **15.46** | 14.96 |
| Al K    | **31.51** | 21.46 |
| Pt M    | 3.41    | 0.32    |
|         |         |         |
| Totals  | 100.00  |         |

FIG. 7

| Element | Weight% | Atomic% |
|---------|---------|---------|
|  |  |  |
| C K | 7.43 | 11.89 |
| O K | 51.06 | 61.34 |
| Al K | **36.96** | 26.32 |
| Pt M | 4.55 | 0.45 |
|  |  |  |
| Totals | 100.00 |  |

FIG. 8

| Element | Weight% | Atomic% |
|---------|---------|---------|
|  |  |  |
| C K | 95.37 | 99.70 |
| Pt M | 4.63 | 0.30 |
|  |  |  |
| Totals | 100.00 |  |

FIG. 9

| Element | Weight% | Atomic% |
|---------|---------|---------|
| C K | 25.26 | 35.72 |
| O K | 37.80 | 40.13 |
| F K | 6.78 | 6.07 |
| Al K | 28.00 | 17.68 |
| Zr L | 2.16 | 0.40 |
| | | |
| Totals | 100.00 | |

6μm          Electron Image 1

Europäisches
Patentamt

European
Patent Office

Office européen
des brevets

# EUROPEAN SEARCH REPORT

**Application Number**

EP 24 15 2785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0070098 A (W SCOPE KOREA CO LTD [KR]; W SCOPE [KR]) 30 May 2022 (2022-05-30) * paragraph [0027] * * paragraph [0067] - paragraph [0068] * * paragraph [0044] - paragraph [0045] * * paragraph [0049] * * paragraph [0054] - paragraph [0055] * * paragraph [0042] * ----- | 1-15 | INV. H01M50/426 H01M50/446 H01M50/451 H01M50/457 H01M50/489 H01M50/42 H01M50/46 H01M50/417 H01M10/05 |
| A | US 2020/075910 A1 (KIM GAIN [KR] ET AL) 5 March 2020 (2020-03-05) * the whole document * ----- | 1-15 | H01M10/052 H01M10/0525 H01M10/02 |
| A | US 2013/302661 A1 (KIM IHN [KR] ET AL) 14 November 2013 (2013-11-14) * paragraph [0039] - paragraph [0042]; figure 2 * * paragraph [0046] * * paragraphs [0064], [0066] * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 27 June 2024 | Tylus, Urszula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2785

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2024

| Patent document cited in search report | | Publication date | Patent family member(s) | | Publication date |
|---|---|---|---|---|---|
| KR 20220070098 | A | 30-05-2022 | NONE | | |
| US 2020075910 | A1 | 05-03-2020 | CN | 110875452 A | 10-03-2020 |
| | | | EP | 3618145 A1 | 04-03-2020 |
| | | | HU | E057807 T2 | 28-06-2022 |
| | | | KR | 20200026595 A | 11-03-2020 |
| | | | PL | 3618145 T3 | 21-02-2022 |
| | | | US | 2020075910 A1 | 05-03-2020 |
| | | | US | 2024097181 A1 | 21-03-2024 |
| US 2013302661 | A1 | 14-11-2013 | CN | 103390740 A | 13-11-2013 |
| | | | EP | 2662912 A1 | 13-11-2013 |
| | | | JP | 6280693 B2 | 14-02-2018 |
| | | | JP | 2013235824 A | 21-11-2013 |
| | | | KR | 20130126445 A | 20-11-2013 |
| | | | US | 2013302661 A1 | 14-11-2013 |

EPO FORM P0459

For more details about this annex : see Official Journal of the European Patent Office, No. 12/82

**EP 4 425 678 A1**

## REFERENCES CITED IN THE DESCRIPTION

**Patent documents cited in the description**

- KR 1020230026493

- KR 1020240007840